# DEMANDE DE BREVET EUROPEEN

(11) **EP 4 425 107 A1**
(43) Date de publication de la demande: **04.09.2024**
(21) Numéro de dépôt: 24161167.2
(22) Date de dépôt: 04.03.2024
(51) Int. Cl.: G01D 5/244, G01D 5/245

(54) **PROCEDE D OPTIMISATION D'UN CAPTEUR DE POSITION ANGULAIRE MAGNETIQUE**

(30) Priorité: 02.03.2023 FR 2301949
(71) Demandeur: Codechamp, 23190 Champagnat (FR)
(72) Inventeur: GIBARD, Dominique, 23190 BELLEGARDE EN MARCHE (FR); TALVAT, Taras, 03100 MONTLUCON (FR); BOUYERON, Laurent, 87350 PANAZOL (FR)
(74) Mandataire: Dennemeyer & Associates S.A.

(57) **Abrégé**

L'invention concerne un procédé d'un codeur magnétique (1) comprenant au moins les étapes suivantes :
- a) effectuer un état des lieux des caractéristiques suivantes : origine ou offset, amplitude et phase relative des courbes sinusoïdales, représentatives de la performance du codeur magnétique (1), cela en prenant les caractéristiques une par une,
- b) déterminer au moins une caractéristique à obtenir pour arriver à une performance voulue du codeur magnétique (1), avec des caractéristiques déterminées,
- c) effectuer au moins une correction d'une caractéristique, en choisissant le type de correction à effectuer parmi le réglage de l'offset, la correction de l'amplitude et la correction de phase,
-d) vérifier les caractéristiques du codeur magnétique (1) après correction en effectuant un état des lieux des caractéristiques,
- e) comparer les caractéristiques obtenues à l'étape d) avec les caractéristiques déterminées,
- f) répéter les étapes c) à e) jusqu'à obtention des caractéristiques déterminées.

## Description

L'invention concerne un procédé d'optimisation d'un capteur de position angulaire magnétique ou codeur magnétique.

Par la suite, pour plus de lisibilité, les expressions « capteur de position angulaire » et « codeur magnétique » seront préférentiellement remplacées par le terme « codeur » qui est le terme couramment employé par l'homme du métier.

Il existe divers types de codeurs permettant de déterminer une position angulaire d'un objet: des codeurs optiques, des codeurs magnétiques, des codeurs d'autres types tels que des codeurs capacitifs ou inductifs. Un capteur de position angulaire magnétique ou codeur magnétique est un dispositif permettant, sans contact, de déterminer la position angulaire d'un objet cela par le suivi de la variation d'un champ magnétique selon la position de l'objet. Dans le cas d'un codeur magnétique un aimant permanent, au moins bipolaire, est fixé à un arbre de rotation et génère un champ magnétique. Ce champ magnétique varie en fonction du déplacement de l'aimant, donc selon la rotation de ce dernier. Le champ magnétique est détecté par un capteur configuré en disque qui permet d'obtenir deux courbes sinusoïdales déphasées de 90° et correspondant pour l'une à un sinus et pour l'autre à un cosinus. Par calcul de l'arc tangent, on obtient la mesure d'un angle. On note que l'on détermine, par mesure avec le codeur, quatre positions déphasées de 90° à chaque rotation complète de l'aimant sur 360°, les positions permettant de générer deux courbes sinusoïdales déphasées l'une par rapport à l'autre. L'utilisation d'un traitement électronique des mesures, donc des valeurs lues par le codeur, des différentes positions permet, globalement, d'affiner par un facteur 100 la valeur obtenue de la position angulaire. Ainsi, comme la période de chaque courbe est donnée par la relation 360°/nombre de paires de pôles magnétiques, on gagne en finesse de mesure lorsque l'on utilise des aimants multipolaires, par exemple avec un nombre de pôles, sud et nord, compris généralement mais non exclusivement entre 16 et 64. Typiquement, on peut obtenir une finesse de mesure, donc une détection d'une variation de la position angulaire, de l'ordre de 1,2 seconde d'arc avec un codeur magnétique.

Par rapport à un codeur optique, un codeur magnétique n'est pas sensible aux polluants tels que des poussières. Il est moins fragile qu'un codeur optique du fait de l'absence de partie en verre. Un codeur magnétique consomme peu d'énergie car il n'y a pas de source lumineuse et il est d'une durée de vie élevée du fait du faible nombre de pièces d'usure mécanique. Les codeurs magnétiques ont donc un coût de revient moins élevé que les codeurs optiques. De plus, si dans le cas d'un codeur optique on note un facteur de forme moyen, c'est-à-dire un décalage significatif entre les valeurs des sinus et cosinus obtenues à partir des mesures et les valeurs des sinus et cosinus théoriques dit parfaits, cela n'est pas le cas avec un codeur magnétique, bipolaire ou multipolaire, qui présente un facteur de forme excellent, les mesures permettant d'obtenir des valeurs des sinus et cosinus quasi parfaites.

Néanmoins, l'utilisation de codeurs magnétiques reste limitée car ils présentent, globalement, une performance de mesures moindre que les codeurs optiques. Cela, entre autres, du fait de l'impossibilité d'obtenir un pas polaire aussi fin que la gravure d'un disque optique et, pour certains codeurs de type magnéto résistifs, du fait de l'hystérésis magnétique, c'est-à-dire le fait que les courbes observées lors de l'augmentation et lors de la diminution du champ magnétique ne sont pas parfaitement superposables.

Par l'expression « performance de mesures », on désigne un ensemble de paramètres susceptibles d'affecter une mesure d'une manière ou d'une autre. Il s'agit, entre autres, de l'exactitude donc de la véracité des mesures fournies, de la résolution donc de la plus petite variation de position angulaire pouvant être détectée, de la précision du codeur illustrée par le degré de répétabilité des mesures et de la linéarité qui est appréciée par la différence entre la mesure et la position angulaire réelle.

La partie électronique d'un codeur magnétique ou ASIC (Application-Specific Integrated Circuit) est un circuit intégré qui regroupe sur une même puce électronique toutes les fonctions nécessaires au fonctionnement du codeur. Or l'ASIC étant intégré dans le silicium constitutif de la puce électronique et placé au niveau des aimants, il s'avère qu'un pas dit pas polaire des aimants ne correspond pas avec un pas dit pas silicium, du fait que l'ASIC est figé et ne bouge pas, contrairement aux aimants qui par définition, sont mobiles dans un plan de rotation parallèle au plan principal de la puce électronique. Il convient de noter que le pas silicium a une valeur fixe et qu'il est le même pour tous les ASIC. Pour mémoire, le pas silicium est la distance minimale séparant deux capteurs intégrés sur une même puce électronique. En d'autres termes, par nature, toute puce électronique avec un ASIC induit un décalage constant et connu entre les courbes correspondant aux mesures du sinus et du cosinus. Pour remédier à cela, on peut soit faire varier le diamètre de la piste circulaire sur laquelle se trouvent les aimants, soit augmenter ou diminuer le nombre de pôles. Ainsi, on ajuste le pas polaire sur le double du pas silicium, ce qui représente le rapport optimal. Une telle modification si elle est efficace et simple est néanmoins limitée car elle ne s'applique que dans une certaine limite de tailles des codeurs magnétiques. En effet, l'utilisation et l'emplacement du codeur impliquent des contraintes en termes de dimensions du codeur magnétique. De ce fait, si l'utilisation de codeurs magnétiques est possible dans de nombreux domaines, tels que les transports terrestres, ferroviaires, maritimes, l'éolien, le spatial et l'aéronautique, les performances des codeurs magnétiques en limitent l'emploi à des usages où une précision et/ou une fiabilité élevées ne sont pas requises.

Afin d'améliorer les performances et/ou l'emploi des codeurs magnétiques, plusieurs solutions ont été envisagées. Ainsi, à titre d'exemples, FR-A-2 893 410 décrit un capteur de position angulaire magnétique dans lequel les éléments magnéto sensibles sont situés au même point et fournissent des signaux sinusoïdaux déphasés de 90°. FR-A-2 952 430 divulgue un codeur magnétique bidirectionnel à rotation de champ. FR-A-2 965 347 concerne un codeur magnétique comportant une sonde de mouvement relatif par rapport à l'aimant afin de fournir une valeur de la position calculée en fonction de l'arc tangent avec un coefficient de correction qui permet de minimiser les variations de mesures. EP-A-3 667 346 décrit un codeur avec plusieurs éléments magnétiques orientés de sorte à minimiser la déviation du champ magnétique dans une plage donnée. EP-A-1 014 039 décrit un codeur magnétique avec une disposition des éléments constitutifs du codeur permettant d'avoir une structure simple et avec une résolution élevée. US-B-6 326 781 divulgue un codeur magnétique adapté pour déterminer la position angulaire d'un arbre rotatif sur 360°. EP-A-3 617 660 a pour objet un dispositif de détection d'angle de rotation utilisé pour des moteurs électriques automobiles. Le dispositif est un codeur magnétique avec plusieurs pistes magnétiques, les corrections des valeurs sinus et cosinus étant faites en temps réel. Un premier signal sinusoïdal et un premier signal cosinus issus du premier capteur magnétique sont fournis à un premier calculateur de correction. Un deuxième signal sinusoïdal et un deuxième signal cosinus émis par le deuxième capteur magnétique sont fournis à un deuxième calculateur de correction. Les signaux sont corrigés de manière prédéfinie. L'amplitude et l'offset sont corrigés par un calculateur. L'amplitude et la phase étant corrigées simultanément. La plupart des solutions envisagées modifient la structure du codeur et/ou n'interviennent que sur certains des facteurs affectant la performance du codeur magnétique. Ainsi il existe un besoin en matière d'optimisation des codeurs magnétiques, afin d'améliorer les performances de ceux-ci pour développer leurs utilisations dans de nombreux domaines d'application.

L'invention a pour objet de proposer un procédé permettant d'optimiser les performances d'un codeur magnétique, cela sans modifications structurelles et sans affecter les coûts de fabrication d'un codeur magnétique.

A cet effet l'invention concerne un procédé d'optimisation d'un codeur magnétique comportant un aimant multipolaire constitué de deux pistes concentriques formées chacune d'une pluralité de paires d'aimants bipolaires, les pôles sud et nord étant alternés entre aimants voisins situés sur une même piste et formant une paire d'aimants, chaque piste fournissant au moins deux courbes sinusoïdales décalées, une courbe correspondant à un sinus et l'autre à un cosinus, caractérisé en ce qu'il comprend au moins les étapes suivantes:
- a) effectuer un premier relevé des valeurs des caractéristiques suivantes de deux courbes sinusoïdales représentatives d'un signal émis par chaque piste à partir de l'ensemble des paires d'aimants bipolaires lors d'un tour complet du codeur: origine selon l'axe des ordonnées ou offset, une pour un sinus et une pour un cosinus, amplitude et phase relative des courbes sinusoïdales, cela en prenant les caractéristiques une par une,
- b) déterminer une correction à effectuer d'au moins une valeur d'une des caractéristiques suivantes : origine selon l'axe des ordonnées ou offset, une pour un sinus et une pour un cosinus, amplitude et phases relatives des courbes sinusoïdales, lesdites valeurs étant représentatives d'une performance optimale du codeur magnétique définie par un offset du sinus et un offset du cosinus tous les deux nuls, des amplitudes du sinus et du cosinus égales et un déphasage entre les courbes sinusoïdales égal à un quart de période, cela en prenant les caractéristiques une par une,
- c) effectuer, pour la piste externe en premier, au moins une correction d'une caractéristique, ladite correction étant choisie parmi trois types de corrections relatives à chacune des caractéristiques définies, à savoir le réglage de l'offset, la correction de l'amplitude et la correction de phases à effectuer pour obtenir une performance optimale du codeur magnétique définie par un offset du sinus et un offset du cosinus tous les deux nuls, des amplitudes du sinus et du cosinus égales et un déphasage entre les courbes sinusoïdales égal à un quart de période,
- d) effectuer un second relevé des valeurs des caractéristiques suivantes de deux courbes sinusoïdales représentatives d'un signal émis par chaque piste à partir de l'ensemble des paires d'aimants bipolaires lors d'un tour complet du codeur: origine selon l'axe des ordonnées ou offset, une pour un sinus et une pour un cosinus, amplitude et phase relative des courbes sinusoïdales, représentatives de la performance du codeur magnétique, cela en prenant les caractéristiques une par une,
- e) comparer les valeurs des caractéristiques obtenues à l'étape d) avec la correction de la au moins une valeur d'une des caractéristiques déterminée à l'étape b),
- f) vérifier les deux autres caractéristiques non corrigées pour chaque courbe pour vérifier si les valeurs définies à l'étape b) sont atteintes et
- g) répéter les étapes c) à f) pour chacune des caractéristiques non corrigées en choisissant le type de correction à effectuer parmi le type de corrections non encore effectuées jusqu'à obtention de la performance du codeur magnétique telle que définie à l'étape b).

Grâce à l'invention, sans modification structurelle du codeur on peut effectuer des corrections simples et rapides permettant une optimisation du codeur, ses performances étant améliorées.

Selon des aspects avantageux mais non obligatoires un tel procédé peut comporter une ou plusieurs des étapes suivantes :
La correction de l'offset est réalisée en premier.

Les corrections de l'erreur du codeur sont effectuées par transformé Rapide de Fourier dit FFT (Fast Fourier Transform).

Les corrections de l'erreur du codeur sont effectuées par itération.

Dans le cas d'un codeur magnétique ayant deux pistes concentriques d'aimants bipolaires, la correction de la piste interne n'est réalisée que si l'erreur résiduelle après calcul de l'arc tangente est supérieure à un quart de la période des signaux sinus et cosinus de la piste externe.

L'invention sera mieux comprise et d'autres avantages de celle-ci apparaîtront plus clairement à la lecture de la description qui va suivre, donnée uniquement à titre d'exemple non limitatif et faite en référence aux dessins annexés dans lesquels:
[Fig. 1] est une vue en perspective, simplifiée d'un capteur de position angulaire magnétique selon un mode de réalisation de l'invention et
[Fig. 2] est une illustration, à une autre échelle, de deux courbes sinusoïdales déphasées de 90°, une pour un sinus et une pour un cosinus, obtenues lors de la mesure de positions angulaires par le codeur magnétique de la figure 1, illustrant un type d'erreur, à savoir le décalage de l'origine sur les ordonnées ou offset et
[Fig. 3] est une illustration similaire à la figure 2, illustrant d'autres types d'erreurs, le décalage de l'origine sur les ordonnées ayant été corrigé.

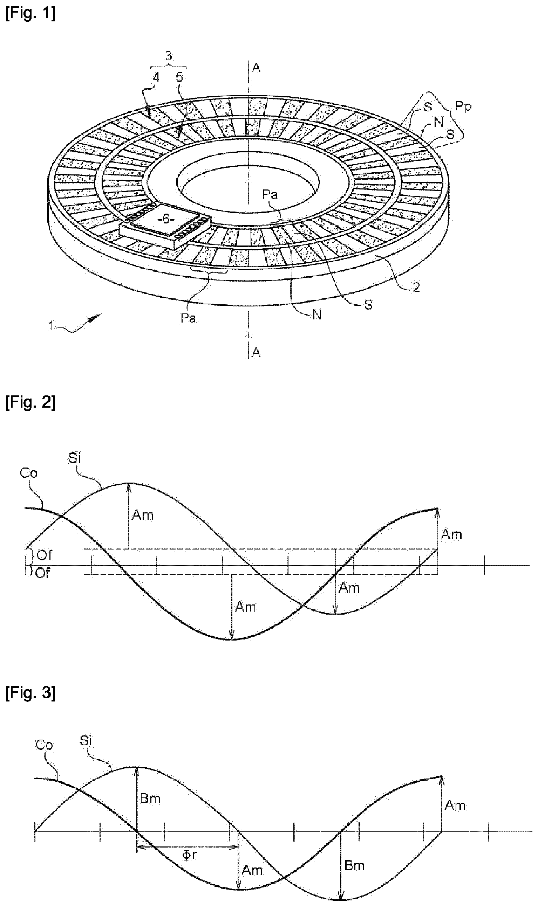

La figure 1 est une illustration d'un mode de réalisation de l'invention. Ici, un capteur de position angulaire magnétique 1, désigné par la suite sous l'expression codeur magnétique est schématiquement illustré. Il est configuré en un disque 2 libre en rotation dans un plan, ici horizontal, autour d'un axe central vertical illustré par la référence AA. Sur une face, le disque 2 comprend un aimant multipolaire 3. L'aimant 3 est formé par deux pistes concentriques 4 et 5. Chaque piste 4, 5 est composée d'une alternance régulière d'aimants bipolaires avec leurs pôles sud S et nord N alternés. Pour mémoire, on définit le pas polaire Pp comme étant la distance entre deux pôles N ou S consécutifs de deux aimants voisins situés sur une même piste 4 ou 5. L'alternance des pôles N et S concerne les aimants bipolaires situés sur une même piste 4 ou 5, cela pour chaque piste 4, 5. Le nombre de paires de pôle étant différent entre les pistes 4 et 5, il existe une zone angulaire dans laquelle il y a une alternance des pôles S et N entre les pistes 4 et 5 et une zone angulaire dans laquelle des pôles de même nature, sud S ou nord N, situés sur les pistes 4 et 5 sont en regard les uns des autres. Ainsi, chaque piste 4, 5 définit un aimant multipolaire formé d'une pluralité notée n de paires Pa d'aimants situés sur deux pistes 4, 5 ayant des pôles magnétiques sud S, nord N alternés. La période d'une paire Pa, lors d'une rotation complète du codeur autour de l'axe AA, est de 360°/n, avec une valeur de n, nombre de paires d'aimants, différente entre les pistes 4 et 5, du fait que ces dernières ont un nombre différent d'aimants. Une telle période correspond au double du pas polaire.

Chaque paire Pa fournit, du fait de sa constitution avec deux aimants à pôles alternés, un champ magnétique dont l'évolution spatiale est sinusoïdale. Les capteurs situés dans l'ASIC fournissent au moins deux signaux par piste 4, 5. Lors d'un tour complet chaque paire Pa produit une oscillation ce qui permet de générer, pour chaque signal, à partir de l'ensemble des paires, une courbe sinusoïdale à n périodes. Chaque piste 4, 5 fournit ainsi au moins deux courbes sinusoïdales. Ces courbes sinusoïdales sont décalées, comme cela ressort de la figure 2, étant entendu qu'une courbe correspond à un sinus, notée Si, et l'autre à un cosinus, notée Co. Une cellule 6 comprenant les éléments électroniques de mesure du champ magnétique, donc l'ASIC, est positionnée au-dessus de l'aimant 3, en une position où elle détecte les pôles sud S et nord N des aimants constitutifs des deux pistes 4 et 5 lorsque ces derniers passent sous la cellule 6 lors de la rotation du codeur 1. Par traitement électronique du signal, on peut diviser par un facteur 100 la finesse du signal obtenu, étant entendu que l'on privilégie souvent les facteurs correspondant à des puissances de 2. Pour mémoire la finesse d'un codeur est également nommée résolution. La résolution d'un codeur est la plus petite variation du signal qui produit une variation perceptible, et donc mesurable et mesurée, par le codeur 1. A titre d'exemple, un nombre n de paires Pa d'aimants est généralement compris entre 16 et 64, ce qui correspond sensiblement à ce qui est techniquement réalisable du fait des dimensions courantes des codeurs. A titre d'exemple, avec un nombre de paires Pa de 32, la période T est de : T= (360/32)/100 suite au traitement électronique, au lieu de : T=360/32. En d'autres termes, plus le nombre n de paires Pa sera élevé et plus la finesse du codeur 1 sera importante, donc de facto plus la variation de la position angulaire détectable sera faible, après traitement électronique.

La partie électronique, donc l'ASIC, est intégrée dans la cellule électronique 6, plus précisément dans le silicium constitutif de la cellule électronique, ceci afin d'obtenir une protection maximale de l'électronique dans un minimum de place. Il est connu qu'une telle construction de l'ASIC induit un décalage spécifique entre les courbes sinusoïdales Si et Co. Ce décalage correspond au rapport entre le pas polaire Pp et le pas silicium tel que défini précédemment. C'est ce rapport qui détermine le déphasage entre les courbes Si et Co. Le pas silicium est connu et invariable pour tous les ASIC. Il convient donc d'ajuster le pas polaire Pp entre les deux pistes 4, 5 d'aimants en fonction de la valeur du pas silicium, ceci afin d'obtenir le déphasage correct désiré. Le déphasage correct est égal à un quart période notée π/2- un sinus ou un cosinus ayant une période de 2 π - lorsque le pas polaire Pp est le double du pas silicium. En effet, le pas polaire Pp représente une demi-période et le pas silicium représente un quart de période. Pour cela, une des solutions connues est de faire varier le diamètre de l'aimant multipolaire en faisant varier le diamètre des pistes 4, 5. Une telle solution trouve rapidement ses limites du fait des contraintes de tailles que doit respecter le codeur.

Afin de pouvoir s'affranchir des contraintes de tailles du codeur et d'ajuster au mieux le pas polaire Pp par rapport au pas silicium, plusieurs solutions sont envisagées par le déposant. Les diverses solutions sont décrites dans un ordre qui ne reflète ni l'importance relative d'une solution par rapport aux autres ni son degré d'efficacité relative par rapport à l'efficacité des autres solutions. L'ordre est celui qui a été envisagé par le déposant pour valider les solutions.

Tout d'abord il a été envisagé d'effectuer une correction de phase entre les courbes Si du sinus et Co du cosinus pour s'affranchir des différences entre les pas polaire Pp et pas silicium. En effet, si, lors de la lecture de la valeur mesurée du déphasage entre les deux courbes sinusoïdales, le déphasage ne correspond pas à un décalage d'exactement 90°, on effectue une correction de phase entre les courbes Si et Co pour s'affranchir des différences entre les pas polaire Pp et pas silicium. Le décalage sera ramené à 90° électroniquement, afin d'avoir le bon arc tangent et donc le bon angle.

Une autre solution envisagée par le déposant est l'emploi d'un capteur à effet Hall. Dans un capteur à effet Hall la mesure de variation du champ magnétique est associée à une électronique qui permet une excellente linéarité du signal avant transmission. Ainsi, plus la distance est faible entre l'aimant et le capteur et plus l'effet Hall sera fort car la distance entre l'aimant et le capteur influence l'amplitude du signal reçu. Ceci permet une correction de l'amplitude Am, Bm du signal, étant entendu que les courbes Si et Co doivent avoir la même amplitude Am comme illustré à la figure 2. La correction s'effectue par traitement électronique du signal ou gain qui se traduit par une variation de l'amplitude Am.

Une autre solution pour optimiser un codeur magnétique envisagée par le déposant concerne l'offset Of. On désigne par ce terme, de manière connue en soi, le décalage de l'origine des courbes Si et Co sur l'axe des ordonnées, cela lorsqu'elles ont le même gain donc la même amplitude Am. Dans ce cas le décalage des courbes Si et Co est orienté vers le haut ou vers le bas des courbes, comme cela ressort de la figure 2. L'invention modifie cet offset Of, de sorte que le décalage de l'origine entre les courbes Si et Co soit nul, donc que les courbes Si et Co aient la même origine sur l'axe de ordonnées.

Le procédé objet de l'invention combine trois types de corrections : réglage de l'offset Of, correction du gain et correction de phase, afin d'optimiser l'emploi d'un codeur magnétique. En pratique, la première étape du procédé objet de l'invention est d'effectuer un état des lieux, donc une collecte, des caractéristiques suivantes : origine selon l'axe des ordonnées ou offset Of, amplitude et phase relative des courbes sinusoïdales Si et Co du codeur magnétique, cela en prenant les caractéristiques une par une. Ces caractéristiques sont représentatives des performances du codeur. On détermine ensuite des valeurs de ces caractéristiques à obtenir pour optimiser les performances du codeur, donc réaliser un offset du sinus et un offset du cosinus tous les deux nuls, une amplitude du sinus et une amplitude du cosinus égales et un déphasage des courbes Si et Co correct et égal à un quart de période. La détermination de ces valeurs se fait pour chaque caractéristique prise une par une. En d'autres termes, on définit, selon les besoins, un cahier des charges auquel doivent satisfaire les caractéristiques mentionnées précédemment pour un codeur magnétique donné.

L'étape suivante consiste à effectuer une correction, en choisissant le type de correction parmi les trois types de corrections relatives à chacune des caractéristiques définies, à savoir parmi le réglage de l'offset Of, la correction du gain ou amplitude et la correction de phases. Une fois la première correction réalisée pour chaque courbe Si et Co, on revérifie les deux autres caractéristiques du codeur, pour chaque courbe Si et Co et, si une autre correction est nécessaire car les caractéristiques déterminées précédemment ne sont pas encore atteintes, on effectue cette correction suivante en la choisissant parmi les corrections non encore effectuées, cela pour les caractéristiques concernées et pour chaque courbe Si, Co. On répète ainsi ces étapes autant que nécessaire, jusqu'à obtention des valeurs déterminées des caractéristiques déterminées, à savoir offset, amplitude et phase relative des courbes Si et Co donc jusqu'à l'optimisation voulue du codeur, donc jusqu'au déphasage correct égal à un quart de période.

Il est à noter que, lorsque les corrections sont effectuées par une méthode de Transformation de Fourier Rapide dite FFT (Fast Fourier Transform), l'ordre de correction des caractéristiques importe peu. En revanche, lorsque les corrections sont effectuées par itération, le déposant a noté que l'ordre est important et c'est la caractéristique concernant l'origine ou offset Of qu'il convient de corriger en premier.

Les corrections sont indépendantes les unes des autres et elles doivent, en principe, toutes être effectuées pour optimiser le codeur. Avantageusement mais non obligatoirement, la correction de l'offset Of est réalisée en premier, cela selon la méthode de correction choisie. Il est connu que la correction de la phase décale l'offset Of mais non l'inverse. En effet, lors de la correction de phase les signaux Si et Co sont une combinaison linéaire des signaux Si et Co initiaux. Ceci a pour conséquence de modifier leurs offset respectifs qui suivent la même combinaison linéaire des offsets initiaux. il est donc préférable de commencer les corrections par l'offset. Pour effectuer cette correction de l'erreur du codeur, on agit par la méthode de Transformée de Fourier Rapide ou FFT, l'acronyme étant préférentiellement employé. Il est possible d'utiliser la correction par FFT car chaque erreur au niveau de l'offset Of a une signature unique et les combinaisons des erreurs également. Ainsi, par FFT, on détermine une constante, au sens vectoriel du terme. La deuxième coordonnée de ce vecteur est une constante complexe. C'est la partie réelle de cette constante qui sera ajoutée ou retranchée à la courbe Co et la partie imaginaire de cette constante qui sera ajoutée ou retranchée à l'offset Of de la courbe Si pour annuler les offsets des courbes.

Une FFT effectuée à partir de 2ⁿ mesures de l'erreur également réparties sur un tour est un vecteur comportant 2ⁿ coordonnées complexes. La première coordonnée est purement réelle et correspond à la moyenne des 2ⁿ mesures. En tant que telle, elle n'a aucun intérêt pour la correction des signaux. Une deuxième coordonnée est la constante complexe corrigeant les offsets. Une troisième coordonnée est un complexe dont la partie réelle est le facteur de correction de la phase et la partie imaginaire l'amplitude différentielle. On obtient également une constante qui servira de multiplicateur pour la correction de l'amplitude. Cette constante est différente de la constante évoquée précédemment car elle est réelle et non vectorielle. Il s'agit, par exemple, du facteur par lequel il faut multiplier le signal Si pour que son amplitude soit identique à celle du signal Co. L'avantage d'utiliser la méthode dite FFT est que la correction est directement déduite du résultat de la FFT, alors qu'avec la méthode par itération, on doit d'abord avoir mesuré l'amplitude des deux courbes, Si ou Co, pour pouvoir effectuer la correction.

Comme cela ressort de la figure 3, l'amplitude Am de la courbe Co est différente de l'amplitude Bm de la courbe Si, à savoir dans l'exemple illustré à la figure 3, l'amplitude Bm est supérieure à l'amplitude Am. En variante, c'est l'inverse. Il existe un déphasage noté Φr entre les deux courbes, déphasage qui est diffèrent du déphasage théorique attendu. Lors de la correction de phase, on obtient un facteur de multiplication unique par lequel on multiplie la courbe Si avant de l'ajouter à la courbe Co pour obtenir une courbe Co corrigée. Pour obtenir une courbe Si corrigée, la démarche est identique : on multiplie par le même facteur unique la courbe Co avant de l'ajouter à la courbe Si. Pour avoir un angle juste après la correction de phase, on « réinjecte » une partie de la valeur du sinus Si dans le cosinus Co et réciproquement afin de décaler la phase sans modifier l'amplitude relative des courbes Si et Co. La valeur réinjectée est modulée par un facteur de correction de phase calculée à partir de la tangente de la moitié du défaut de déphasage du cosinus par rapport au sinus, ce défaut étant la différence entre le déphasage constaté et celui attendu.

L'avantage d'une correction par FFT plutôt que par itération est que l'on peut obtenir en une seule fois les constantes et facteurs de correction. Une fois les corrections effectuées, elles sont validées par un contrôle qui consiste en une mesure de l'erreur du codeur qui doit demeurer inférieur à la valeur maximale définie étant entendu qu'il est préférable d'avoir une amplitude optimale des signaux pour effectuer les corrections.

Le procédé de correction s'applique, dans le cas d'un codeur magnétique 1 ayant deux pistes de paires d'aimants, d'abord sur la piste externe 4 dite piste master qui permet de générer les points faibles du codeur. Par cette expression, on désigne les bits qui sont au-delà du rang correspondant au nombre de pôles, sachant que le poids augmente par puissance de deux. Par exemple pour un codeur de 20 bits de résolution et 32 paires de pôles (n=6), les bits de poids faibles vont du rang 7 au rang 20. La seconde piste 5, interne, génère en combinaison avec la piste master les points forts du codeur, donc selon la terminologie mentionnée précédente, les bits qui sont en deçà du rang correspondant au nombre de pôles, soit, avec l'exemple ci-dessus, les bits allant du rang 1 au rang 6 sont les bits de poids forts. Si l'erreur mesurée sur la piste interne 5 après le calcul de l'arc tangente est suffisamment faible, typiquement inférieure à une demi période en valeur absolue avec un algorithme optimisé et sans dérive des signaux, alors l'erreur est acceptable et aucune correction n'est nécessaire sur la seconde piste 5 car une telle erreur n'affecte pas la précision du codeur 1. En pratique si l'erreur résiduelle mesurée sur la piste interne après le calcul de l'arc tangente est supérieure à un quart de la période de la piste externe, alors la correction de la piste interne est réalisée.

Le fait de faire les corrections dans l'ordre suivant : offset, phase, amplitude implique qu'il convient de faire une itération finale. Si on effectue les corrections dans l'ordre suivant : offset, amplitude et phase, on effectue les corrections sur la piste externe 4 en premier, donc sur la piste master. Si cette correction est suffisante, il n'est pas utile de faire les corrections sur la piste interne 5, cela tant que l'erreur sur la piste 5 ne dépasse pas une demi-période comme évoqué ci-dessus, un algorithme optimisé est en mesure de reconstituer les bits de poids dits fort donc par exemple ceux de rangs 1 à 6 pour 64 points, tant que l'erreur sur la piste 5 avant correction est acceptable, comme indiqué ci-dessus.

## Revendications

1. Procédé d'optimisation d'un codeur magnétique (1) comportant un aimant multipolaire (3) constitué de deux pistes (4, 5) concentriques formées chacune d'une pluralité de paires d'aimants bipolaires, les pôles sud (S) et nord (N) étant alternés entre aimants voisins situés sur une même piste (4, 5) et formant une paire d'aimants, chaque piste (4, 5) fournissant au moins deux courbes sinusoïdales décalées, une courbe (Si) correspondant à un sinus et l'autre (Co) à un cosinus, **caractérisé en ce qu'**il comprend au moins les étapes suivantes :
- a) effectuer un premier relevé des valeurs des caractéristiques suivantes de deux courbes sinusoïdales (Si, Co) représentatives d'un signal émis par chaque piste (4, 5) à partir de l'ensemble des paires d'aimants bipolaires lors d'un tour complet du codeur (1): origine selon l'axe des ordonnées ou offset (Of), une pour un sinus et une pour un cosinus, amplitude (Am, Bm) et phase relative des courbes sinusoïdales (Si, Co), cela en prenant les caractéristiques une par une,
- b) déterminer une correction à effectuer d'au moins une valeur d'une des caractéristiques suivantes : origine selon l'axe des ordonnées ou offset (Of), une pour un sinus et une pour un cosinus, amplitude (Am, Bm) et phases relatives des courbes sinusoïdales (Si, Co), lesdites valeurs étant représentatives d'une performance optimale du codeur magnétique (1) définie par un offset (Of) du sinus et un offset (Of) du cosinus tous les deux nuls, des amplitudes (Am, Bm) du sinus et du cosinus égales et un déphasage entre les courbes sinusoïdales (Si, Co) égal à un quart de période, cela en prenant les caractéristiques une par une,
- c) effectuer, pour la piste externe en premier, au moins une correction d'une caractéristique, ladite correction étant choisie parmi trois types de corrections relatives à chacune des caractéristiques définies, à savoir le réglage de l'offset (Of), la correction de l'amplitude (Am, Bm) et la correction de phases à effectuer pour obtenir une performance optimale du codeur magnétique (1) définie par un offset (Of) du sinus et un offset (Of) du cosinus tous les deux nuls, des amplitudes (Am, Bm) du sinus et du cosinus égales et un déphasage entre les courbes sinusoïdales (Si, Co) égal à un quart de période,
- d) effectuer un second relevé des valeurs des caractéristiques suivantes de deux courbes sinusoïdales (Si, Co) représentatives d'un signal émis par chaque piste (4, 5) à partir de l'ensemble des paires d'aimants bipolaires lors d'un tour complet du codeur (1): origine selon l'axe des ordonnées ou offset (Of), une pour un sinus et une pour un cosinus, amplitude (Am, Bm) et phase relative des courbes sinusoïdales (Si, Co), représentatives de la performance du codeur magnétique (1), cela en prenant les caractéristiques une par une,
- e) comparer les valeurs des caractéristiques obtenues à l'étape d) avec la correction de la au moins une valeur d'une des caractéristiques déterminée à l'étape b),
- f) vérifier les deux autres caractéristiques non corrigées pour chaque courbe (Si, Co) pour vérifier si les valeurs définies à l'étape b) sont atteintes et
- g) répéter les étapes c) à f) pour chacune des caractéristiques non corrigées en choisissant le type de correction à effectuer parmi le type de corrections non encore effectuées jusqu'à obtention de la performance du codeur magnétique (1) telle que définie à l'étape b).

2. Procédé selon la revendication 1, **caractérisé en ce que** la correction de l'offset (Of) est réalisée en premier.

3. Procédé selon la revendication 1, **caractérisé en ce que** les corrections d'erreur du codeur (1) aux étapes b) à f) sont effectuées par Transformé Rapide de Fourier dit FFT (Fast Fourier Transform).

4. Procédé selon la revendication 1, **caractérisé en ce que** les corrections d'erreur du codeur (1) aux étapes b) à f) sont effectuées par itération.

5. Procédé selon la revendication 1, **caractérisé en ce que** dans le cas d'un codeur magnétique (1) ayant deux pistes (4, 5) concentriques d'aimants bipolaires, la correction de la piste interne (5) n'est réalisée que si l'erreur résiduelle après calcul de l'arc tangente est supérieure à un quart de la période des signaux sinus et cosinus de la piste externe (4).
